# EUROPÄISCHE PATENTSCHRIFT

(11) **EP 2 004 532 B1**
(45) Veröffentlichungstag und Bekanntmachung des Hinweises auf die Patenterteilung: **30.03.2016**
(21) Anmeldenummer: 07720069.9
(22) Anmeldetag: 07.04.2007
(51) Int. Cl.: B65H 29/04

(54) **GREIFER ZUM ERFASSEN UND FÖRDERN VON FLACHEN GEGENSTÄNDEN**
GRIPPER FOR HOLDING AND CONVEYING FLAT OBJECTS
PINCE DESTINÉE À LA PRÉHENSION ET AU TRANSPORT D'OBJETS PLATS

(30) Priorität: 12.04.2006 CH 610062006
(43) Veröffentlichungstag der Anmeldung: 24.12.2008
(73) Patentinhaber: Ferag AG, 8340 Hinwil (CH)
(72) Erfinder: MÄDER, Carl, Conrad, CH-8335 Hittnau (CH); AUF DER MAUR, Konrad, CH-8625 Gossau (CH)
(74) Vertreter: Frei Patent Attorneys
(86) Internationale Anmeldenummer: PCT/CH2007/000172
(87) Internationale Veröffentlichungsnummer: WO 2007/115421

(56) Entgegenhaltungen:
- DE-A1- 3 102 242
- US-A- 5 575 379
- US-A- 5 755 436

## Beschreibung

Die Erfindung liegt auf dem Gebiete der Fördertechnik und betrifft einen Greifer nach dem Oberbegriff des unabhängigen Patentanspruchs. Der Greifer ist geeignet zum Erfassen und zum gehaltenen Fördern von flachen Gegenständen, insbesondere von Druckprodukten wie Zeitungen, Zeitschriften oder Broschüren oder von kleinen Gruppen davon.

Es ist bekannt, flache Gegenstände, insbesondere Druckprodukte wie Zeitungen, Zeitschriften oder Broschüren in dichten Förderströmen zu fördern, wobei die Druckprodukte im wesentlichen parallel zueinander ausgerichtet hintereinander gefördert werden und die Förderrichtung senkrecht oder schief (nicht parallel) zu den Hauptflächen der Druckprodukte ausgerichtet ist. Dabei sind die Abstände zwischen aufeinanderfolgenden Druckprodukten üblicherweise relevant kleiner als ihre flächige Ausdehnung. Für die Förderung derart dichter Förderströme werden beispielsweise Greifertransporteure eingesetzt. Diese weisen eine Mehrzahl von Greifern auf, die an einem Förderorgan, beispielsweise an einer Gelenk-Gliederkette befestigt sind, wobei die Kette in einem Kanal umlaufend angetrieben ist und die Greifer für das Erfassen und gehaltene Fördern je eines Druckproduktes oder gegebenenfalls einer kleinen Gruppe von Druckprodukten ausgerüstet sind.

Die genannten Greifer weisen üblicherweise zwei Klemmzungen auf, die mit entsprechenden, entlang des Förderweges angeordneten Steuermitteln relativ zueinander in eine offene und eine geschlossene Konfiguration schwenkbar sind, wobei in der offenen Konfiguration aufeinander ausgerichtete Klemmbacken, die an den distalen Enden der Klemmzungen angeordnet sind, voneinander beabstandet und nicht klemmfähig sind und in der geschlossenen Konfiguration diese Klemmbacken gegeneinander oder gegen einen dazwischen angeordneten Bereich eines Druckproduktes gepresst werden. Zum Ergreifen eines Druckproduktes wird ein Bereich davon zwischen den Klemmbacken des offenen Greifers positioniert und wird dann der Greifer geschlossen. Zur gehaltenen Förderung wird der Greifer in der geschlossen Konfiguration gehalten, vorteilhafterweise in der geschlossenen Konfiguration verriegelt, und zur Entlassung des Druckproduktes wieder geöffnet bzw. entriegelt. Das Dokument US-A-5 575 379 offenbart einen Greifer (siehe Figur 1) zum Erfassen und gehaltenen Fördern von flachen Gegenstanden, welcher Greifer einen Greiferkörper (4), eine erste Klemmzunge (15), eine zweite Klemmzunge (11) und ein Mittel zur Erzeugung einer Klemmkraft aufweist, wobei die Klemmzungen an ihren distalen Enden Klemmbacken aufweisen, wobei die zweite Klemmzunge (11) relativ zur ersten Klemmzunge (15) um eine Schwenkachse (13) schwenkbar und dadurch der Greifer in eine offene und eine geschlossene Konfiguration bringbar ist, wobei in der geschlossenen Konfiguration die Klemmbacken der beiden Klemmzungen aneinander oder an einem eingeklemmten Gegenstand anliegen und durch die Klemmkraft gegen einander gepreßt werden.

In der Publikation DE-3102242 (oder US-4381056, F113) ist ein Beispiel eines derartigen Greifers beschrieben. Der Greifer weist zwei mit aufeinander ausgerichteten Klemmbacken ausgerüstete Klemmzungen auf. Die erste Klemmzunge ist fest an einem Greiferkörper angeordnet und die zweite Klemmzunge ist im Greiferkörper mit Hilfe einer Welle verschwenkbar gelagert. Die zweite Greiferzunge weist an ihrem proximalen Ende eine Spiralfeder auf, die an der Welle befestigt ist und sich um diese windet. Solange die zweite Klemmzunge bei einer Drehung der Welle relativ zum Greiferkörper mit dieser mitbewegt, das heisst, entsprechend verschwenkt wird, bleibt die Spiralfeder entspannt. Wenn aber die Klemmbacke der zweiten Klemmzunge an der Klemmbacke der ersten Klemmzunge anliegt und die Welle weiter gedreht wird, spannt sich die Spiralfeder und überträgt dabei eine Klemmkraft auf ein zwischen den Klemmbacken der beiden Klemmzungen geklemmtes Druckprodukt. Zum Öffnen und Schliessen des Greifers und zum Spannen der zweiten Klemmzunge greift an der Welle der zweiten Klemmzunge ein Steuerhebel mit Steuerrolle an und sind entlang des Förderweges stationäre Kulissen vorgesehen, auf denen die Steuerrolle abrollt. Ferner weist der Greifer Mittel auf, mit denen die zweite Klemmzunge bzw. die Welle in ihrer geschlossenen und gespannten Position relativ zur ersten Klemmzunge verriegelt wird. Dafür ist je ein Verriegelungselement an der Welle und an der ersten Klemmzunge angeordnet. Sobald die Welle eine vorgegebene Drehposition erreicht hat, rasten die Verriegelungselemente ineinander ein. Die Verriegelung wird geöffnet durch eine mit dem Verriegelungselement an der ersten Klemmzunge verbundene Klinke, die von einem stationären Steuerelement betätigbar ist.

Die Erfindung stellt sich die Aufgabe, bekannte Greifer der oben genannten Art, insbesondere den oben kurz beschriebenen Greifer gemäss DE-31202242 dahingehend zu verbessern, dass diese Greifer für das Erfassen und Fördern einer breiteren Palette von flachen Gegenständen anwendbar werden. Insbesondere soll der erfindungsgemässe Greifer sich dafür eignen, nicht nur dickere und insbesondere schwerere aber auch sehr dünne und leichte, flache Gegenstände sicher zu ergreifen und gehalten zu fördern, sondern er soll sich auch dafür eignen, flache Gegenstände und insbesondere auch Gruppen von flachen Gegenständen, die Bereiche unterschiedlicher Dicke aufweisen, sicher zu ergreifen und gehalten zu fördern. Ferner soll der erfindungsgemässe Greifer es möglich machen, die genannte, breite Palette von flachen Gegenständen derart klemmend zu erfassen, dass verschiebende und dadurch schmierend auf Druckprodukte wirkende Kräfte zwischen den Klemmbacken der Klemmzungen und dem ergriffenen Gegenstand oder zwischen einzelnen Teilen des ergriffenen Gegenstandes zu einem derart hohen Grade vermieden werden können, dass auch Druckprodukte, auf denen die Druckfarben noch nicht ihre endgültige Widerstandskraft gegen Verschmieren entwickelt haben, problemlos gehandhabt werden können.

Diese Aufgabe wird gelöst durch den Greifer, wie er in den Patentansprüchen definiert ist.

Ein Hauptmerkmal, durch das sich der erfindungsgemässe Greifer von den bekannten Greifern unterscheidet, besteht darin, dass das distale Ende mindestens einer der Klemmzungen des erfindungsgemässen Greifers zwei Arme aufweist, die sich zu beiden Seiten der Zunge etwa parallel zur Schwenkachse nach aussen erstrecken, und die an ihren freien Enden je eine Klemmbacke tragen, derart, dass die beiden Klemmbacken möglichst weit voneinander beabstandet sind. Die Arme der mindestens einen Klemmzunge sind dabei in der Richtung der Klemmkraft federnd ausgestaltet. Ferner ist es vorteilhaft, die beiden Arme mindestens der einen Klemmzunge leicht gegen die andere Klemmzunge zu richten, derart, dass die beiden Arme zusammen auf ihrer der anderen Klemmzunge zugewandten Seite eine leicht konkave Form bilden.

Die an den freien Enden der Arme angeordneten Klemmbacken weisen vorteilhafterweise im wesentlichen ebene Auflageflächen auf, deren Ausrichtung und gegebenenfalls Form durch die Klemmkraft, die die Klemmbacken gegeneinander oder gegen einen dazwischen eingeklemmten Gegenstrand presst, an die Auflagefläche der Gegen-Klemmbacke oder an den eingeklemmten Gegenstand adaptierbar sind.

Durch die Aufteilung der Klemmwirkung auf zwei seitlich voneinander beabstandete Klemmbereiche, die federnd miteinander verbunden sind, kann ein eingeklemmtes Druckprodukt nicht nur stabiler gehalten werden (weniger vom Greifer und vom Förderorgan aufzunehmende quer zur Förderrichtung wirkende Drehmomente) sondern es ist auch möglich, einen Gegenstand sicher zu erfassen, der in den beiden Klemmbereichen ungleiche Dicken aufweist.

Die Auflageflächen der Klemmbacken liegen vorteilhafterweise im wesentlichen in einer radial zur Schwenkachse ausgerichteten Ebene, wobei um diese Schwenkachse nicht nur die zweite relativ zur ersten Klemmzunge sondern auch die erste Klemmzunge relativ zum Greiferkörper verschwenkbar ist. In einer bevorzugten Ausführungsform liegen die Auflageflächen der Klemmbacken der ersten Klemmzunge in einer radial zur Schwenkachse ausgerichteten Ebene und die Auflageflächen der zweiten Klemmzunge bilden relativ zu einer solchen radialen Ebene einen kleinen Winkel, derart, dass die Auflageflächen der Klemmbacken der zweiten Klemmzunge dann parallel zu den Auflageflächen der Klemmbacken der ersten Klemmzunge ausgerichtet sind, wenn der Abstand zwischen den Auflageflächen der Klemmbacken der beiden Klemmzungen etwa einer mittleren Dicke eines zu handhabenden flachen Gegenstandes entspricht.

Durch die Anordnung der Auflageflächen der Klemmbacken im wesentlichen in einer radial zur Schwenkachse ausgerichteten Ebene wird erreicht, dass der Schwerpunkt eines erfassten Druckprodukts, wenn es frei hängend (erste Klemmzunge und damit verriegelte zweite Klemmzunge relativ zum Greiferkörper frei schwenkbar) gefördert wird, unter der Schwenkachse angeordnet ist, so dass mindestens bei einer derartigen Förderung vom Greiferkörper und vom Förderorgan kein Drehmoment in einer Ebene parallel zur Förderrichtung aufzunehmen ist und der Gegenstand nicht gebogen wird. Durch die genannte Ausrichtung der Auflageflächen der beiden Klemmzungen relativ zueinander wird erreicht, dass bei der Komprimierung eines zu erfassenden Druckproduktes zwischen den Klemmbacken der Klemmzungen Schiebebewegungen quer zur Klemmbewegung auf ein Minimum reduziert werden.

Beispielhafte Ausführungsformen des erfindungsgemässen Greifers werden anhand der folgenden Figuren im Detail beschrieben. Dabei zeigen:
- **Figuren 1 bis 3**: eine bevorzugte Ausführungsform des erfindungsgemässen Greifers in verschiedenen Zuständen (Seitenansichten);
- **Figuren 4 und 5**: die distalen Enden der beiden Klemmzungen des Greifers gemäss Figuren 1 bis 3 in Förderrichtung gesehen;
- **Figuren 6 bis 9**: verschiedene Ausführungsformen von Klemmbacken für den erfindungsgemässen Greifer.

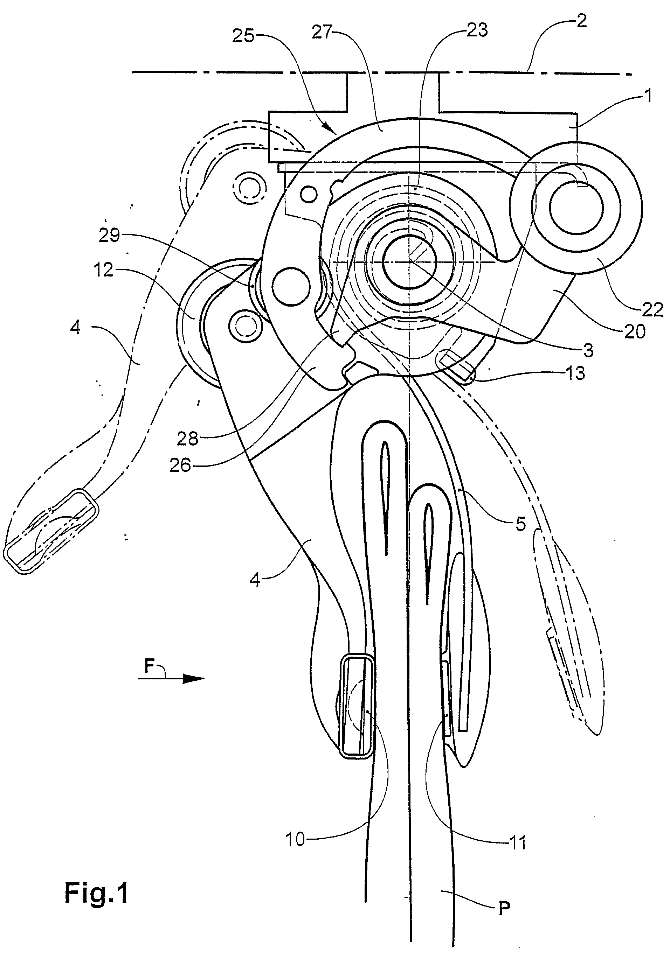

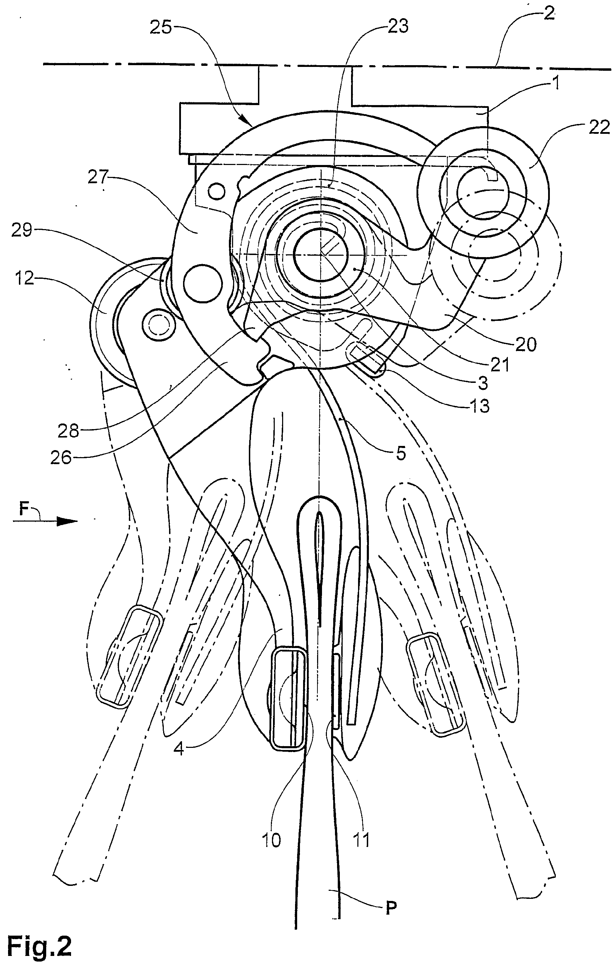

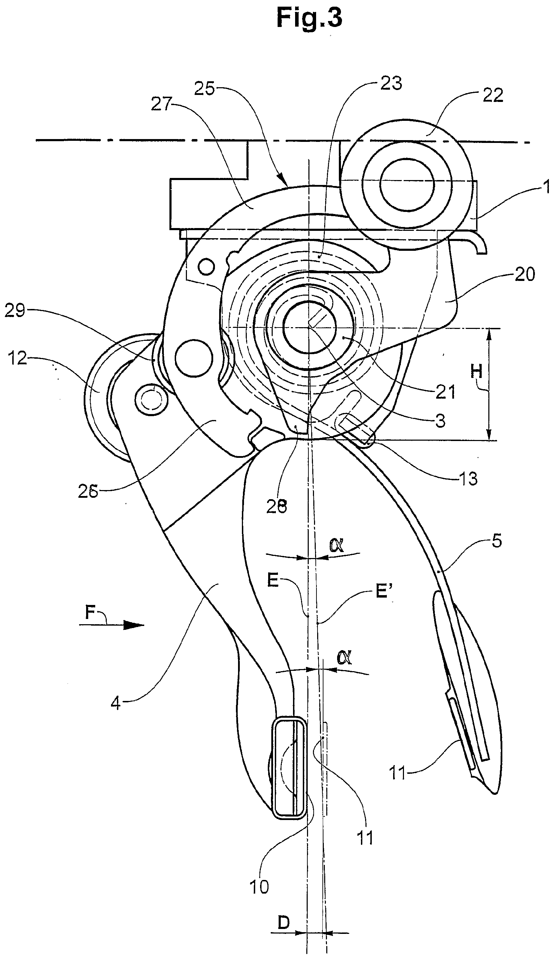

**Figuren 1 bis 3** zeigen eine bevorzugte Ausführungsform des erfindungsgemässen Greifers, von der Seite gesehen, das heisst mit einer Blickrichtung quer zur Förderrichtung. Der Greifer ist in der Figur 1 ausgezogen in geschlossenem Zustand mit zwei zwischen den Klemmbacken eingeklemmten Druckprodukten P, die frei hängend gefördert werden, dargestellt und strichpunktiert in einem offenen Zustand. Figur 2 zeigt den Greifer ausgezogen wiederum in geschlossenem Zustand mit einem frei hängend geförderten Druckprodukt P und strichpunktiert ebenfalls in geschlossenem Zustand, wobei aber die Klemmzungen relativ zum Förderorgan bzw. Greiferkörper verschwenkt sind. Figur 3 zeigt den Greifer wiederum in einem offenen Zustand.

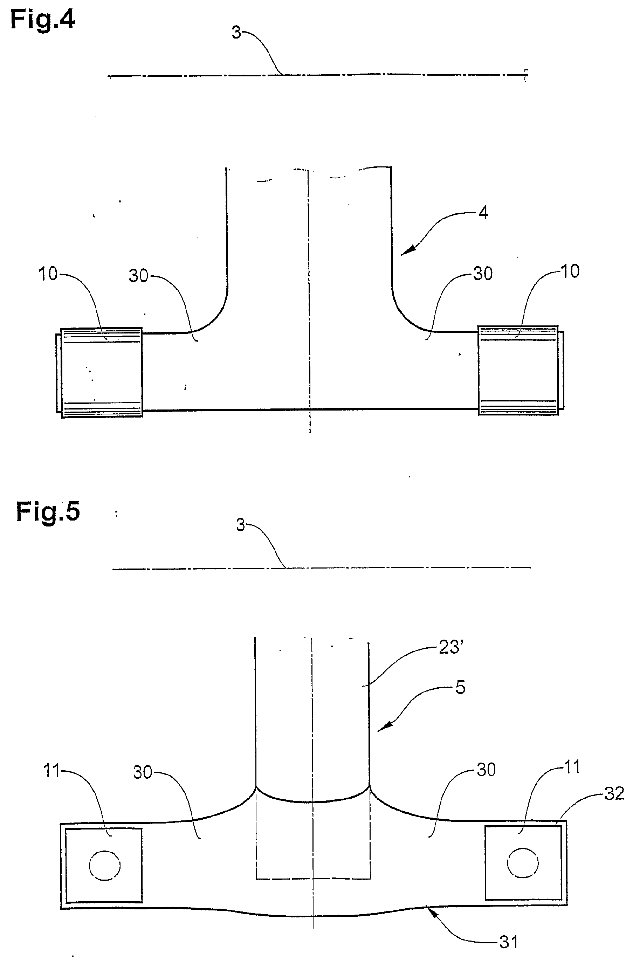

Der Greifer weist einen Greiferkörper 1 auf, der am Förderorgan (durch die strichpunktierte Linie 2 angedeutet) montiert ist. Um eine Schwenkachse 3 verschwenkbar ist im Greiferkörper 1 die erste Klemmzunge 4 gelagert. Um dieselbe Schwenkachse 3 ist in der ersten Klemmzunge 4 die zweite Klemmzunge 5 verschwenkbar gelagert. Die Schwenkachse 3 ist senkrecht zur Förderrichtung F ausgerichtet und die erste Klemmzunge 4 ist die nachlaufende Klemmzunge. Beide Klemmzungen weisen an ihren distalen Enden je ein Paar 10 und 11 von quer zur Schwenkbewegung bzw. Förderrichtung voneinander beabstandeten Klemmbacken auf, wobei in den Figuren 1 bis 3 von jedem Paar 10 und 11 nur eine Klemmbacke sichtbar ist. Die Klemmbakken werden im Zusammenhang mit den Figuren 4 bis 9 näher beschrieben.

Die Schwenkposition der ersten Klemmzunge 4 relativ zum Greiferkörper 1 ist bestimmt einerseits durch eine Steuerrolle 12, die auf entsprechenden, nicht dargestellten stationären Kulissen abrollt, und andererseits durch eine Spreizfeder (nicht dargestellt), die zwischen der ersten und der zweiten Klemmzunge angeordnet ist und diese in einer möglichst weit voneinander entfernten Position hält, wobei die äussersten Positionen der beiden Klemmzungen 4 und 5 durch entsprechende Anschläge (für die zweite Klemmzunge: Anschlag 13) am Greiferkörper 1 definiert sind. Die beiden Greiferzungen sind in der Figur 1 strichpunktiert in ihrer durch die Spreizfeder und die Anschläge definierten, äussersten Position dargestellt.

Die Schwenkposition der zweiten Klemmzunge 5 relativ zur ersten Klemmzunge 4 wird bestimmt durch einen Steuerhebel 20. Dieser greift an der Welle 21 an und trägt eine weitere Steuerrolle 22, wobei die Welle in der ersten Klemmzunge 4 drehbar gelagert ist und die zweite Klemmzunge 5 an der Welle befestigt ist. Auch diese weitere Steuerrolle 22 rollt auf stationär angeordneten Kulissen (nicht dargestellt) ab. Wenn diese Kulisse die weitere Steuerrolle 22 nach unten drückt, dreht diese die Welle 21 im Uhrzeigersinn, so dass die zweite Klemmzunge 5 gegen die erste Klemmzunge 4 bewegt wird. Da die zweite Klemmzunge 5 über eine Spiralfeder 23 an der Welle 21 befestigt ist, kann die Welle unter Spannung der Spiralfeder 23 weiter gedreht werden, auch wenn die zweite Klemmzunge 5 nicht weiter verschwenkt werden kann, weil ihre Klemmbacken 11 an den Klemmbacken 10 der ersten Klemmzunge 4 oder an einem zwischen den beiden Klemmzungen eingeklemmten Gegenstand anstehen. Durch eine solche Weiterdrehung wird die Spiralfeder 23 gespannt und eine Klemmkraft aufgebaut. In einer vorgegebenen Drehposition der Welle 21 relativ zur ersten Klemmzunge 4 werden die zwei Klemmzungen miteinander verriegelt.

Für die Verriegelungsfunktion ist beispielsweise an der ersten Klemmzunge 4 eine Verriegelungsklinke 25 mit einem Verriegelungshebel 26 und einem Steuerhebel 27 drehbar angeordnet und weist der an der Welle 21 befestigte Steuerhebel 20 ein mit dem Verriegelungshebel 26 kooperierendes Verriegelungselement 28 auf. Durch ein stationär angeordnetes, auf den Steuerhebel 26 der Verriegelungsklinke 25 wirkendes Steuerelement (nicht dargestellt) wird der Verriegelungshebel 26 der Klinke 25 gegen die Kraft einer vorgespannten Stellfeder 29 von einer Verriegelungsposition (Figuren 1 und 2 ausgezogen) in eine Ruheposition (Figur 3) gebracht, wobei sich die Spannung der Feder 23 abbaut und die Spreizfeder den Greifer öffnet. Sobald die Welle 21 eine durch die Steuerklinke 25 und das Verriegelungslement 28 vorgegebene Drehposition relativ zur ersten Klemmzunge 4 erreicht hat, schnappen der Verriegelungshebel 26 und das Verriegelungselement 28 in eine Verriegelungsposition, die nur durch die oben beschriebene Betätigung des Steurehebles 27 der Verriegelungsklinke 25 wieder aufgelöst werden kann.

Im in der Figur 1 ausgezogen dargestellten Zustand des Greifers sind die beiden Klemmzungen miteinander verriegelt. Es fehlt eine stationäre Kulisse, auf der die die Schwenkposition der ersten Klemmzunge 4 bestimmende Steuerrolle 12 abrollt, so dass diese Schwenkposition durch die Schwerkraft bestimmt ist. Wie bereits weiter oben erwähnt, ist der Greifer derart ausgestaltet, dass die Klemmbacken 10 und 11 der beiden Greiferzungen 4 und 5 einen dazwischen eingeklemmten Gegenstand P radial zur Schwenkachse 3 ausgerichtet halten, so dass der Schwerpunkt des Gegenstandes P, senkrecht unter der Schwenkachse liegt. Das heisst, der Gegenstand wird durch die Schwerkraft nicht gebogen und bewirkt kein Drehmoment, das von den Klemmzungen 4 und 5, vom Greiferkörper 1 und letztendlich vom Förderorgan aufgenommen werden müsste.

Der in der Figur 1 strichpunktiert dargestellte Zustand des Greifers ist der offene Zustand, in dem die Positionen der beiden Klemmzungen 4 und 5 durch die Spreizfeder und durch die Anschläge (13) am Greiferkörper 1 bestimmt ist.

Der in der Figur 2 ausgezogen dargestellte Greiferzustand ist wiederum der geschlossene und verriegelte Zustand, wobei die Schwenkposition der ersten Klemmzunge 4 relativ zum Greiferkörper 1 beispielsweise durch die Schwerkraft bestimmt ist. Durch entsprechende Steuerung der Steuerrolle 12 oder durch entsprechende Veränderung der Lage des Greiferkörpers 1 bzw. des Förderorgans relativ zur Schwerkraft kann die erste Klemmzunge 4 zusammen mit der damit verriegelten zweiten Klemmzunge 5 in andere Schwenkpositionen gebracht werden, z.B. in die beiden in der Figur 2 strichpunktiert dargestellten Schwenkpositionen, wobei im Falle der Lageveränderung des Greiferkörpers die relative Lage von Schwenkachse und Schwerpunkt des ergriffenen Gegenstandes unverändert bleibt.

Figur 3 dient zur Illustration einer bevorzugten gegenseitigen Ausrichtung der Auflageflächen der Klemmbacken 10 und 11 der beiden Klemmzungen 4 und 5. Die Auflageflächen der Klemmbacken 10 der ersten Klemmzunge 4 sind in einer senkrechten Ebene E positioniert, die radial zur Schwenkachse 3 ausgerichtet ist. Die zweite Klemmzunge 5 ist in ihrer offenen Position dargestellt und strichpunktiert in derjenigen Position, in der die Auflageflächen ihrer Klemmbacken 11 parallel zu den Auflageflächen der Klemmbacken 10 der ersten Klemmzunge 4 ausgerichtet sind. Daraus ist ersichtlich, dass die Ausrichtung der Auflageflächen der Klemmbacken 11 mit einer entsprechenden Radialebene E' einen Winkel α bilden. Dieser Winkel entspricht dem Verschwenkungswinkel zwischen der ersten und der zweiten Klemmzunge bei einem Abstand D, der einer mittleren Dicke von zu handhabenden Gegenständen entspricht.

Aus den Figuren 1 bis 3 ist ersichtlich, dass der erfindungsgemässe Greifer eine sehr kompakte Bauweise aufweist, die bei gleicher Bauhöhe wie bekannte Greifer eine relevant grössere Tiefe des Greifermauls ermöglicht. Dies bedeutet, dass der Klemmbereich eines erfassten Gegenstandes weiter von dessen Kante entfernt sein kann, als dies bei bekannten Greifern der Fall ist. Durch die grössere Tiefe des Greifermauls liegen die Klemmbereiche eines erfassten Gegenstandes weiter von dessen Kante entfernt, also näher bei seinem Schwerpunkt (kleinere Hebelarme für die Belastungskräfte). Es wird dadurch auch möglich, wie in Figur 1 dargestellt, Gruppen von gestaffelt aufeinanderliegenden Druckprodukten sicher zu ergreifen und gehalten zu fördern. Zu dieser kompakten Bauweise trägt u.a. der anders als gemäss dem Stande der Technik in Förderrichtung vorlaufende Steuerhebel 27 der Verriegelungsklinke 25 bei.

In der in den Figuren 1 bis 3 dargestellten, bevorzugten Ausführungsform des erfindungsgemässen Greifers ist die Distanz H zwischen der Schwenkachse und dem innersten Punkt des Greifermauls auf ein Minimum reduziert, derart, dass der Greifer eine Greifermaultiefe aufweist, die ca. 75% des Abstandes zwischen Schwenkachse und Klemmbacken ausmacht.

Figur 4 zeigt eine beispielhafte Ausführungsform des distalen Endes der ersten Klemmzunge 4 eines erfindungsgemässen Greifers mit Blickwinkel parallel zur Förderrichtung. Dieses distale Ende weist auf beiden Seiten einen etwa parallel zur Schwenkachse 3 von der Zunge abstehenden Arm 30 auf, an dem in einer möglichst weit aussen liegenden Position je eine Klemmbacke 10 angeordnet ist. Die Klemmbacken sind beispielsweise ringförmig und werden auf die Arme 30 von deren freiem Ende her aufgesteckt. Die erste Klemmzunge besteht beispielsweise aus einem Kunststoff und die Arme sind nicht oder nur sehr wenig federnd ausgestaltet.

Figur 5 zeigt eine beispielhafte Ausführungsform des distalen Endes der zweiten Klemmzunge 5 eines erfindungsgemässen Greifers. Auch diese Klemmzunge weist seitliche Arme 30 auf, die in äusseren Positionen die Klemmbacken 11 tragen. Die Klemmbacken 11 sind beispielsweise in Öffnungen 32 der Arme 30 eingeschnappt oder aufgesteckt. Die Arme 30 der zweiten Klemmzunge 5 sind beispielsweise Teil eines distalen Aufsatzes 31, der auf einen die eigentliche Klemmzunge 5 bildenden Teil 23' der Spiralfeder (23 in Figuren 1 bis 3) aufgesteckt ist. Dabei ist der Aufsatz vorteilhafterweise derart ausgebildet, dass die Arme 30 parallel zur Presskraft, das heisst, senkrecht zur Papierebene der Figur 5 federnd sind. Vorteilhafterweise bildist der Aufsatz senkrecht zur Papierebene derart gebogen, dass die Klemmbacken der in Richtung der ersten Klemmzunge über einem mittleren Bereich des Aufsatzes vorstehen. Der Aufsatz 31 besteht beispielsweise aus einem Kunststoff und die Feder 23 aus Federstahl.

Für Fördervorrichtungen, die für die Förderung von Gegenständen vom Format und Gewicht von beispielsweise Zeitungen oder Zeitschriften geeignet sind, ist es vorteilhaft, die beiden Klemmbacken einer Klemmzunge mindestens 10 cm voneinander beabstandet anzuordnen.

Es ist auch möglich, nur die eine Klemmzunge mit den oben beschriebenen Armen und zwei Klemmbacken auszurüsten, während die andere Klemmzunge entsprechend breit ist und eine einzige, entsprechen breite Klemmbacke aufweist.

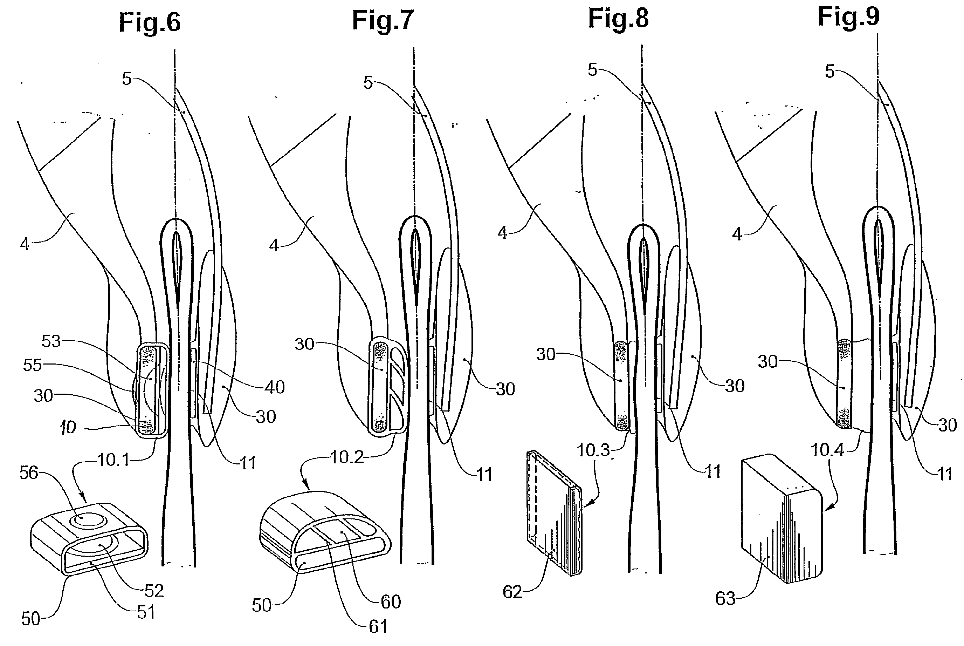

**Figuren 6 bis 9** zeigen in Seitenansicht verschiedene Ausführungsformen von Klemmbacken 10 und 11 für die Klemmzungen 4 und 5 des erfindungsgemässen Greifers. Die Klemmbacke 11 der zweiten Klemmzunge ist in allen Figuren 6 bis 9 ein Profil mit einem Hohlraum 40, das am Arm 30 beispielsweise angeformt ist. Das Hohlprofil weist eine elastisch deformierbare Deckschicht auf, die gegen die Klemmbacke 10 der ersten Klemmzunge 4 gerichtet ist und somit die Auflagefläche der Klemmbacke 11 bildet.

Die in den Figuren 6 bis 9 dargestellten Klemmbacken 10.1 bis 10.4 der ersten Klemmzunge 4 sind separat auch dreidimensional dargestellt.

Die Klemmbacke 10.1 gemäss Figur 6 ist vom freien Armende her auf den Arm 30 aufsteckbar. Sie weist dafür einen rohrförmigen, beschränkt elastischen Trägerteil 50 auf. Im rohrförmigen Trägerteil 50 ist eine innere Platte 51 angeordnet, die in ihrer Mitte eine Kugelkalotte 52 aufweist. Der Arm 30 weist an einer entsprechenden Stelle eine der Kugelkalotte 52 entsprechende Vertiefung 53 auf, deren Tiefe etwas kleiner ist als die Höhe der Kugelkalotte 52. Wenn die Klemmbacke 10.1 auf dem Arm 30 aufgesteckt ist, ist die Kugelkalotte 52 in der Vertiefung 53 positioniert, so dass die Platte 51 über ein Kugelgelenk auf dem Arm 30 gelagert ist. Die innere Platte 51 kann sich dadurch in allen Richtungen an die Auflagefläche einer Gegen-Klemmbacke oder an einen erfassten Gegenstand anpassen.

In Figur 6 ist zusätzlich auf der einem erfassten Gegenstand abgewandten Seite des Armes 30 eine Anformung 55 dargestellt, die in Kooperation mit einer Ausbuchtung 56 des rohrförmigen Trägers 50 der Klemmbacke 10.1 diese am Arm fixiert.

Die in der Figur 7 dargestellte Klemmbacke 10.2 ist ebenfalls von der Seite auf den Arm 30 aufsteckbar und weist dafür einen rohrförmigen, beschränkt elastischen Trägerteil 50 auf. An diesem Trägerteil 50 ist ein seitlich offenes, beispielsweise mehrkammeriges Hohlprofil 60 angeordnet, das eine kissenförmige Auflagefläche auf vorteilhafterweise schiefen Stützen 61 bildet.

Die in der Figur 8 dargestellte Klemmbacke 10.3 besteht im wesentlichen aus einem allseitig geschlossenen und mit einer Flüssigkeit gefüllten, flachen Kissen 62, das beispielsweise auf dem Arm 30 aufgeklebt wird.

Die in der Figur 9 dargestellte Klemmbacke 10.4 besteht aus einem flachen Block 63 eines elastisch deformierbaren (z.B. viskoelastisch deformierbaren) Material, wobei der Block 63 ebenfalls beispielsweise durch Kleben am Arm 30 befestigt ist.

Die in den Figuren 6 bis 9 dargestellten Klemmbacken sind beispielhafte Ausführungsformen von für den erfindungsgemässen Greifer geeigneten Klemmbacken, die durch die auf die Klemmzungen ausgeübte Klemmkraft an eine Gegenbacke oder an einen eingeklemmten Gegenstand anpassbar sind. Durch andere Kombinationen der Merkmale der dargestellten Klemmbacken ergeben sich weitere Ausführungsformen dieser Klemmbacken. Insbesondere können die als Klemmbacken 10 der ersten Klemmzunge 4 dargestellten Klemmbacken auch als Klemmbacken 11 der zweiten Klemmzunge 5 und umgekehrt verwendet werden.

Es erweist sich als vorteilhaft, die Auflageflächen der Klemmbacken zu behandeln, damit sie farbabstossend sind, was eine weitere Massname gegen das Verschmieren der Druckprodukte darstellt. Entsprechende Behandlungen sind von anderen Anwendungen (z.B. Förderbänder) an sich bekannt.

Der in den Figuren 1 bis 3 dargestellte Greifer ist ebenfalls eine bevorzugte Ausführungsform des erfindungsgemässen Greifers. Weitere Ausführungsformen dieses Greifers unterscheiden sich vom dargestellten Greifer beispielsweise durch die folgenden Merkmale:
- Die erste Klemmzunge 4 ist relativ zum Greiferkörper 1 nicht verschwenkbar;
- Die zweite Klemmzunge 5 ist ein federndes Element, das ohne Spiralfeder an der Welle befestigt ist, und die beiden Klemmzungen werden gegeneinander verriegelt;
- Beide Klemmzungen sind federnde Elemente;
- Die Spreizfeder zwischen den beiden Klemmzungen fehlt;
- Die Arme 30 beider oder nur der zweiten Klemmzunge sind federnd ausgestaltet;
- Nur eine der beiden Klemmzungen weist seitliche Arme 30 mit je einer Klemmbacke auf, während die andere Klemmzunge eine einzige Klemmbacke aufweist;
- Die Klemmbacken mindestens der einen Klemmzunge sind nicht anpassbar;
- Ein Mittel zur Verriegelung der beiden Klemmzungen in der geschlossenen Konfiguration fehlt.

## Patentansprüche

1. Greifer zum Erfassen und gehaltenen Fördern von flachen Gegenständen (P), insbesondere von Druckprodukten wie Zeitungen, Zeitschriften oder Broschüren, oder von kleinen Gruppen davon, welcher Greifer einen Greiferkörper (1), eine erste Klemmzunge (4), eine zweite Klemmzunge (5) und ein Mittel zur Erzeugung einer Klemmkraft aufweist, wobei die Klemmzungen (4 und 5) an ihren distalen Enden Klemmbacken aufweisen, wobei die zweite Klemmzunge (5) relativ zur ersten Klemmzunge (4) um eine Schwenkachse (3) schwenkbar und dadurch der Greifer in eine offene und eine geschlossene Konfiguration bringbar ist, wobei in der geschlossenen Konfiguration die Klemmbacken der beiden Klemmzungen (4 und 5) aneinander oder an einem eingeklemmten Gegenstand (P) anliegen und durch die Klemmkraft gegen einander gepresst werden, **dadurch gekennzeichnet, dass** mindestens eine der beiden Klemmzungen (4 oder 5) an ihrem distalen Ende zwei sich seitlich erstreckende, parallel zur Klemmkraft federnde Arme (30) aufweist und dass an jedem der Arme (30) eine Klemmbacke (10, 11) mit einer Auflagefläche vorgesehen ist, derart, dass ein eingeklemmter Gegenstand (P) in zwei voneinander beabstandeten Klemmbereichen eingeklemmt wird.

2. Greifer nach Anspruch 1, **dadurch gekennzeichnet, dass** beide Klemmzungen an ihren distalen Enden seitlich angeordnete, federnde Arme (30) mit je einer Klemmbacke (10, 11) aufweisen.

3. Greifer nach Anspruch 1 oder 2, **dadurch gekennzeichnet, dass** die Auflageflächen der Klemmbacken (10, 11) durch die Klemmkraft an die gegenüberliegende Klemmbacke (10, 11) oder an einen eingeklemmten Gegenstand (P) anpassbar sind.

4. Greifer nach Anspruch 3, **dadurch gekennzeichnet, dass** die Auflageflächen der Klemmbacken (10, 11) über ein Kugelgelenk oder über ein elastisch verformbares Hohlprofil (60), über ein elastisch verformbares Material oder über eine Flüssigkeit auf dem Arm bzw. auf den Armen (30) gelagert sind.

5. Greifer nach einem der Ansprüche 1 bis 4, **dadurch gekennzeichnet, dass** die Auflageflächen der Klemmbacken (10, 11) derart behandelt sind, dass sie farbabstossend wirken.

6. Greifer nach einem der Ansprüche 1 bis 5, **dadurch gekennzeichnet, dass** die Auflageflächen der Klemmbacken (10, 11) mindestens der einen Klemmzunge (4 oder 5) in einer zur Schwenkachse (3) radial ausgerichteten Ebene (E) liegen.

7. Greifer nach Anspruch 6, **dadurch gekennzeichnet, dass** die Auflageflächen der Klemmbacken (10) der ersten Klemmzunge (4) in einer zur Schwenkachse radial ausgerichteten Ebene (E) liegen und dass die Auflageflächen der Klemmbacken (11) der zweiten Klemmzunge (5) mit einer radial zur Schwenkachse ausgerichteten Ebene E') einen Winkel (α) bilden, derart, dass die Auflageflächen der Klemmbacken (10, 11) der beiden Klemmzungen (4 und 5) parallel zueinander ausgerichtet sind, wenn ein Gegenstand (P) einer mittleren Dicke zwischen den Klemmbacken (10, 11) eingeklemmt ist.

8. Greifer nach einem der Ansprüche 1 bis 7, **dadurch gekennzeichnet, dass** die Klemmbacken (10, 11) einen rohrförmigen Träger (50) aufweisen und von der Seite auf die Arme (30) aufgesteckt sind.

9. Greifer nach einem der Ansprüche 1 bis 8, weiter **gekennzeichnet durch** ein Verriegelungsmittel, das für eine Verriegelung der Klemmzungen (4 und 5) in der geschlossenen Konfiguration ausgerüstet ist.

10. Greifer nach einem der Ansprüche 1 bis 9, **dadurch gekennzeichnet, dass** die erste Klemmzunge relativ zum Greiferkörper (1) verschwenkbar ist, derart, dass die beiden Klemmzungen (4 und 5) mindestens in der geschlossenen Konfiguration relativ zum Greiferkörper (1) frei schwenkbar sind.

11. Greifer nach einem der Ansprüche 1 bis 10, **dadurch gekennzeichnet, dass** die zweite Klemmzunge (5) über eine Spiralfeder (23) an einer drehbar in der ersten Klemmzunge (4) gelagerten Welle (21) befestigt ist, wobei die Spiralfeder (23) sich um die Welle windet.

12. Greifer nach Anspruch 9 und 11, **dadurch gekennzeichnet, dass** das Verriegelungsmittel an der ersten Klemmzunge (4) und an der Welle (21) der zweiten Klemmzunge (5) angreift.

13. Greifer nach einem der Ansprüche 1 bis 12, **dadurch gekennzeichnet, dass** eine Spreizfeder vorgesehen ist, durch die die beiden Klemmzungen (4 und 5) in der offenen Konfiguration gehalten werden.

14. Greifer nach einem der Ansprüche 1 bis 13, **dadurch gekennzeichnet, dass** eine Greifermaultiefe etwa 75% des Abstandes zwischen den Klemmbacken (10, 11) und der Schwenkachse (3) ausmacht.

15. Greifer nach Anspruch 11, **dadurch gekennzeichnet, dass** die zweite Klemmzunge (5) durch einen Teil (23') der Spiralfeder (23) gebildet ist und dass die Arme (30) Teil eines Aufsatzes (31) sind, der im distalen Bereich auf die Spiralfeder (23) aufgesteckt ist, wobei der Aufsatz vorzugsweise aus Kunststoff und die Spiralfeder (23) vorzugsweise aus Federstahl besteht.

## Claims

1. A gripper for gripping and conveying flat objects (P), in particular printed products such as newspapers, magazines or brochures, or of small groups thereof, said gripper comprising a gripper body (1), a first clamping tongue (4), a second clamping tongue (5) and a means for producing a clamping force, wherein the clamping tongues (4 and 5) comprise clamping jaws at their distal end, wherein the second clamping tongue (5) is pivotable relative to the first clamping tongue (4) about a pivot axis (3), by which means the gripper may be brought into an open and into a closed configuration, wherein the clamping jaws of the two clamping tongues (4 and 5) bear on one another or on a clamped object (P) in the closed configuration, and are pressed against one another by the clamping force,
**characterized in that** at least one of the two clamping tongues (4 or 5) comprises two laterally extending arms (30) at its distal end, which arms (30) are resilient in a direction parallel to the clamping force, and that a clamping jaw (10, 11) with a contact surface is provided on each of the arms (30), in a manner such that a clamped object (P) is clamped in two clamping regions, which are distanced to one another.

2. A gripper according to claim 1, **characterized in that** both clamping tongues at their distal ends comprise laterally arranged resilient arms (30) with in each case a clamping jaw (10, 11).

3. A gripper according to claim 1 or 2, **characterized in that** contact surfaces of the clamping jaws (10, 11) are adaptable to the opposite clamping jaw (10, 11) or to a clamped object (P) by way of the clamping force.

4. A gripper according to claim 3, **characterized in that** the contact surfaces of the clamping jaws (10, 11) are mounted on the arm (30) via a ball joint or an elastically deformable hollow profile (60), via an elastically deformable material or via a fluid.

5. A gripper according to one of the claims 1 to 4, **characterized in that** the contact surfaces of the clamping jaws (10, 11) are treated in a manner such that they act in an ink-repelling manner.

6. A gripper according to one of the claims 1 to 5, **characterized in that** the contact surfaces of the clamping jaws (10, 11) at least of the one clamping tongue (4 or 5), lie in a plane (E) aligned radially to the pivot axis (3).

7. A gripper according to claim 6, **characterized in that** the contact surfaces of the clamping jaws (10) of the first clamping tongue (4) lie in a plane (E) aligned radially to the pivot axis and that the contact surfaces of the clamping jaws (11) of the second clamping tongue (5) form an angle (α) with a plane (E') aligned radially to the pivot axis, in a manner such that the contact surfaces of the clamping jaws (10,11) of the two clamping tongues (4 and 5) are aligned parallel to one another when an object (P) of an average thickness is clamped between the clamping jaws (10,11).

8. A gripper according to one of the claims 1 to 7, **characterized in that** the clamping jaws (10, 11) comprise a tubular carrier (50) and are mounted onto the arms (30) from the side.

9. A gripper according to one of the claims 1 to 8, further **characterized by** a locking means, which is designed for locking the clamping tongues (4 and 5) in the closed configuration.

10. A gripper according to one of the claims 1 to 9, **characterized in that** the first clamping tongue is pivotable relative to the gripper body (1), in a manner such that the two clamping tongues (4 and 5) are freely pivotable relative to the gripper body (1) at least in the closed configuration.

11. A gripper according to one of the claims 1 to 10, **characterized in that** the second clamping tongue (5) is fastened via a spiral spring (23) on a shaft (21), which is rotatably mounted in the first clamping tongue (4), wherein the spiral spring (23) winds around the shaft.

12. A gripper according to claim 9 and 11, **characterized in that** the locking means engage on the first clamping tongue (4) and on the shaft (21) of the second clamping tongue (5).

13. A gripper according to one of the claims 1 to 12, **characterized in that** an expander spring is provided, by way of which the two clamping tongues (4 and 5) are held in the open configuration.

14. A gripper according to claim 1 to 13, **characterized in that** a gripper jaw depth makes up about 75% of the distance between the clamping jaws (10, 11) and the pivot axis (3).

15. A gripper according to claim 11, **characterized in that** the second clamping tongue (5) is formed by a part (23') of the spiral spring (23) and that the arms (30) are part of an attachment (31), which is mounted onto the spiral spring (23) in the distal region, wherein the attachment is preferably made of a plastic material, and the spiral spring (23) is made of spring steel.

## Revendications

1. Pince pour la saisie, le maintien et le transport d'objets plats (P), en particulier de produits d'imprimerie, notamment des journaux, des périodiques ou des brochures ou de petits groupes de ces objets plats, la pince présentant un corps de pince (1), une première dent de serrage (4), une deuxième dent de serrage (5) et un moyen d'application d'une force de serrage, les dents de serrage (4 et 5) présentant des mâchoires de serrage à leur extrémité distale, la deuxième dent de serrage (5) pouvant pivoter par rapport à la première dent de serrage (4) autour d'un axe de pivotement (3) et la pince pouvant ainsi être amenée dans une configuration ouverte ou une configuration fermée, tandis que dans la configuration fermée, les mâchoires de serrage des deux dents de serrage (4 et 5) reposent l'une contre l'autre ou contre un objet (P) serré et sont repoussées l'une contre l'autre par la force de serrage,
**caractérisée en ce que**
au moins l'une des deux dents de serrage (4 ou 5) présente à son extrémité distale deux bras (30) s'étendant latéralement et élastiques dans une direction parallèle à la force de serrage et
**en ce que** sur chacun des bras (30) est prévue une mâchoire de serrage (10, 11) dotée d'une surface d'application, de telle sorte qu'un objet (P) serré est serré dans deux parties de serrage situées à distance l'une de l'autre.

2. Pince selon la revendication 1, **caractérisée en ce que** les deux dents de serrage présentent à leur extrémité distale des bras élastiques (30) disposés latéralement et dotés chacun d'une mâchoire de serrage (10, 11).

3. Pince selon les revendications 1 ou 2, **caractérisée en ce que** les surfaces d'application des mâchoires de serrage (10, 11) peuvent être adaptées à la mâchoire de serrage (10, 11) opposée ou à un objet (P) pincé grâce à la force de serrage.

4. Pince selon la revendication 3, **caractérisée en ce que** les surfaces d'application des mâchoires de serrage (10, 11) sont montées sur le bras ou sur les bras (30) par l'intermédiaire d'une articulation sphérique, d'un profilé creux (60) élastiquement déformable, d'un matériau élastiquement déformable ou d'un liquide.

5. Pince selon l'une des revendications 1 à 4, **caractérisée en ce que** les surfaces d'application des mâchoires de serrage (10, 11) sont traitées de manière à repousser l'encre.

6. Pince selon l'une des revendications 1 à 5, **caractérisée en ce que** les surfaces d'application des mâchoires de serrage (10, 11) d'au moins l'une des pinces de serrage (4 ou 5) sont situées dans un plan (E) orienté radialement par rapport à l'axe de pivotement (3).

7. Pince selon la revendication 6, **caractérisée en ce que** les surfaces d'application des mâchoires de serrage (10) de la première pince de serrage (4) sont situées dans un plan (E) orienté radialement par rapport à l'axe de pivotement et **en ce que** les surfaces d'application des mâchoires de serrage (11) de la deuxième dent de serrage (5) forment avec un plan (E') orienté radialement par rapport à l'axe de pivotement un angle (α) tel que les surfaces d'application des mâchoires de serrage (10, 11) des deux pinces des dents de serrage (4 et 5) sont orientées parallèlement l'une à l'autre lorsqu'un objet (P) d'épaisseur moyenne est serré entre les mâchoires de serrage (10, 11).

8. Pince selon l'une des revendications 1 à 7, **caractérisée en ce que** les mâchoires de serrage (10, 11) présentent un support tubulaire (50) ou sont enfichées par le côté sur les bras (30).

9. Pince selon l'une des revendications 1 à 8, **caractérisée par** un moyen de verrouillage qui est prévu pour verrouiller les dents de serrage (4 et 5) dans la configuration fermée.

10. Pince selon l'une des revendications 1 à 9, **caractérisée en ce que** la première dent de serrage peut pivoter par rapport au corps (1) de la pince de telle sorte qu'au moins dans la configuration fermée, les deux dents de serrage (4 et 5) peuvent pivoter librement par rapport au corps (1) de la pince.

11. Pince selon l'une des revendications 1 à 10, **caractérisée en ce que** la deuxième dent de serrage (5) est fixée par l'intermédiaire d'un ressort spiralé (23) sur un arbre (21) monté dans la première dent de serrage (4) de manière à pouvoir tourner, le ressort spiralé (23) étant enroulé autour de l'arbre.

12. Pince selon les revendications 9 et 11, **caractérisée en ce que** le moyen de verrouillage engage la première dent de serrage (4) et l'arbre (21) de la deuxième dent de serrage (5).

13. Pince selon l'une des revendications 1 à 12, **caractérisée en ce qu'**elle présente un ressort d'écartement par lequel les deux pinces de serrage (4 et 5) sont maintenues dans la configuration ouverte.

14. Pince selon l'une des revendications 1 à 13, **caractérisée en ce que** la profondeur de l'ouverture de la pince correspond à environ 75 % de la distance entre les mâchoires de serrage (10, 11) et l'axe de pivotement (3).

15. Pince selon la revendication 11, **caractérisée en ce que** la deuxième dent de serrage (5) est formée par une partie (23') du ressort spiralé (23) et **en ce que** les bras (30) font partie d'un appendice (31) enfiché dans la partie distale du ressort spiralé (23), l'appendice étant de préférence réalisé en matière synthétique et le ressort spiralé (23) de préférence en acier à ressort.
